# EUROPEAN PATENT APPLICATION

(11) **EP 2 913 294 A1**
(43) Date of publication of application: **02.09.2015**
(21) Application number: 14157184.4
(22) Date of filing: 28.02.2014
(51) Int. Cl.: B66F 5/02, B62B 3/08

(54) **Lifting device**

(71) Applicant: Harenko, Ari, 12400 Tervakoski (FI)
(72) Inventor: Harenko, Ari, 12400 Tervakoski (FI)
(74) Representative: LEITZINGER OY

(57) **Abstract**

The invention is related to a lifting device (1) for lifting grand pianos, pianos or similar heavy objects having an irregular shape into a vertical position on one of their lateral edges. The device (1) includes a frame part (5), support arms (6a-6c, 7a-7e) resting on the ground, gripping means (2) for gripping one edge of the object to be lifted, and driving means (3, 4) connected to the frame part, which are connected functionally to the gripping means (2) for pivoting the object into a vertical position by the gripping means. The support arms (6a-6c, 7a-7e) are provided with ball transfer units (8a, 8b, 13a, 13b) resting on the ground and allowing the device (1) to move freely in different directions along the ground during the lifting movement. The ball transfer units (8a, 8b, 13a, 13b) are placed radially apart from the frame part (5) into mutually different angular positions.

## Description

The present invention relates to a lifting device for lifting grand pianos, pianos or similar heavy objects having an irregular shape into a vertical position on one of their lateral edges, the device including a frame part, support arms resting on the ground, gripping means for gripping one edge of the object to be lifted and driving means connected to the frame part, which are connected functionally to the gripping means for pivoting the object into a vertical position by the gripping means.

Pianos and grand pianos are difficult to transport because they are heavy (100-600 kg) and often have to be moved in stairs and cramped places. Various technical aids have been developed for their transport, but none of them has been adopted to general use and, therefore, pianos and grand pianos are still mainly moved by manpower.

The only device for moving pianos and grand pianos which has been adopted to general use to some extent is the Italian stair climber Pianoplan^{®}. It is quite versatile, but there are also some problems. Firstly, the high price of the device (over 10 000 euros) limits its adoption to widespread use, in addition to which loading pianos, and especially grand pianos, on the Pianoplan^{®} is difficult. While one of the ideas of the Pianoplan^{®} is that moving can be done by one person alone, loading is not necessarily possible without additional help.

EP2612799A1 describes a device for loading grand pianos on the Pianoplan^{®}. The device makes it possible for one person to load grand pianos. It does, however, present some new difficulties. As the overall height of the load is increased, grand pianos no longer fit in commonly used vans. In addition, the loading of vertical pianos becomes almost impossible and due to the higher centre of gravity, the use of Pianoplan^{®} may become dangerously unstable.

EP0863092B1 discloses a device which makes the moving of pianos and grand pianos possible by one person, but it is expensive and heavy (about 200 kg). Since its use due to complex construction is very slow and cumbersome, this device has not been adopted to more widespread use and only a limited number of them have been sold, mainly in France.

One solution for moving grand pianos is a so-called tilting device, an example of which is a German device sold under the trademark TRANSkip^{®}. The problem with these devices is that a grand piano cannot be loaded directly onto any transportation device and their use requires attaching parts which are difficult to secure to the grand piano.

The aim of the present invention is to provide an improved lifting device for grand pianos, pianos or similar heavy objects having an irregular shape, the device being relatively compact and light and simple in structure. To achieve this aim, the device of the invention is characterized in that the support arms are provided with ball transfer units resting on the ground and allowing the device to move freely in different directions along the ground during the lifting movement, the ball transfer units being placed radially apart from the frame part into mutually different angular positions.

In a preferred embodiment of the invention, the frame is made essentially vertical and provided with a linear actuator, such as a spindle motor, the spindle of which is arranged to move in the longitudinal direction of the frame between an extended position extending upwards from the frame and a retracted position. With this combination of a spindle motor and ball transfer units is accomplished a device which is sufficiently powerful for loading even the heaviest (about 600 kg) grand pianos, for example on any moving platform, such as a Pianoplan^{®}, and its use is significantly quicker than that of other aids. In addition, the device is so small in size and weight that it can be used and moved even by one hand.

The invention is described in greater detail in the following, with reference to the accompanying drawings, wherein:
- Figs. 1 to 3: show an embodiment of the lifting device according to the invention in isometric, side and plan views, respectively, the device being in its starting position,
- Figs. 4 to 6: show corresponding views of the embodiment of the lifting device of Figs. 1 to 3, but with the device in an elevated position, and
- Fig. 7: shows an enlarged view of the upper part of the device.

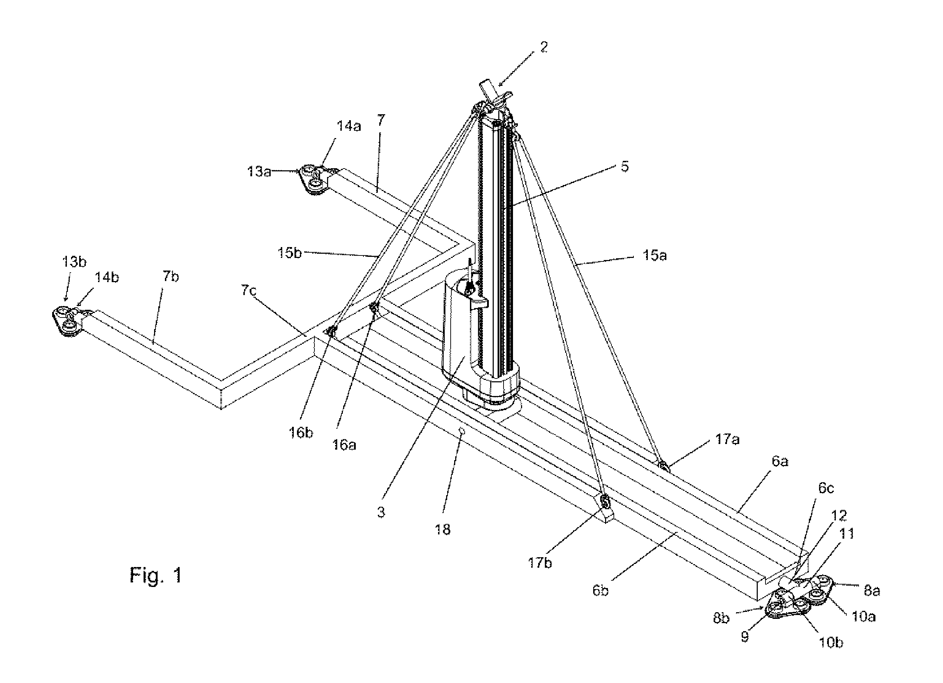

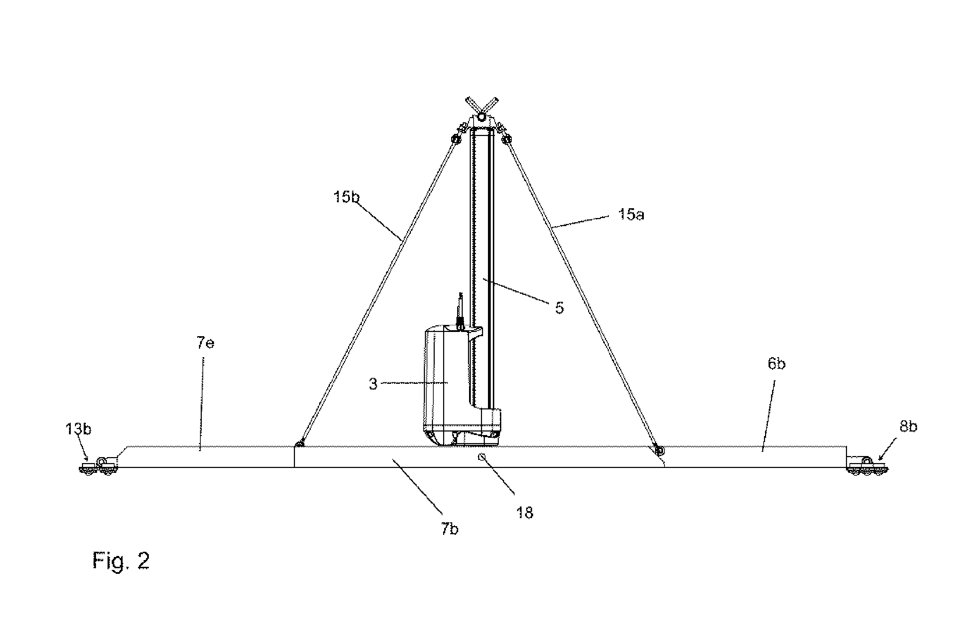

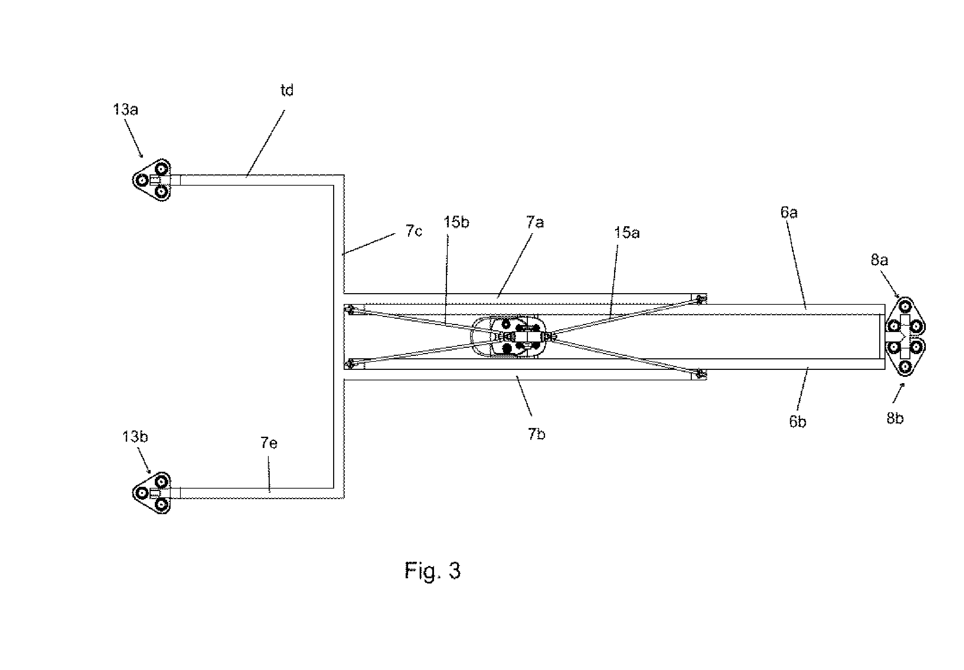

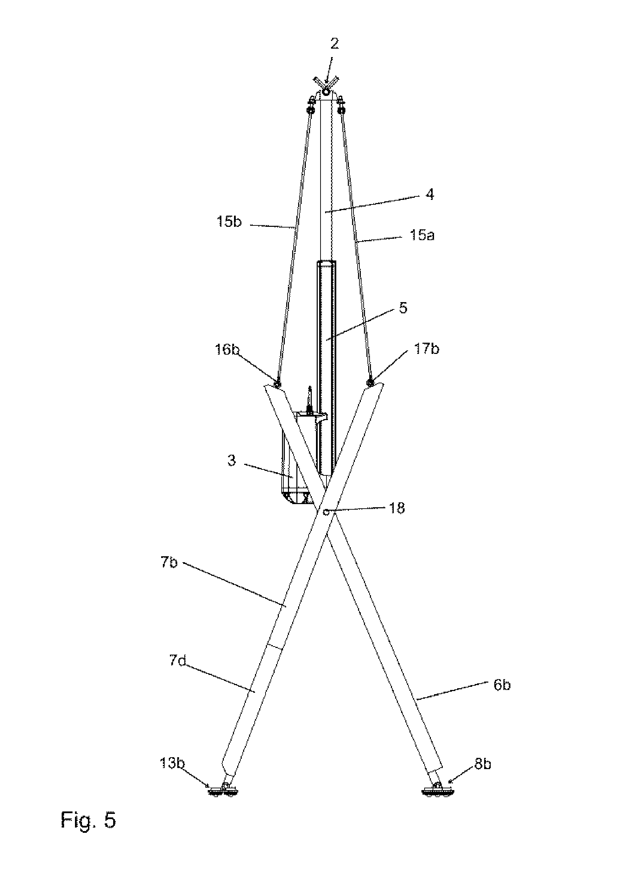

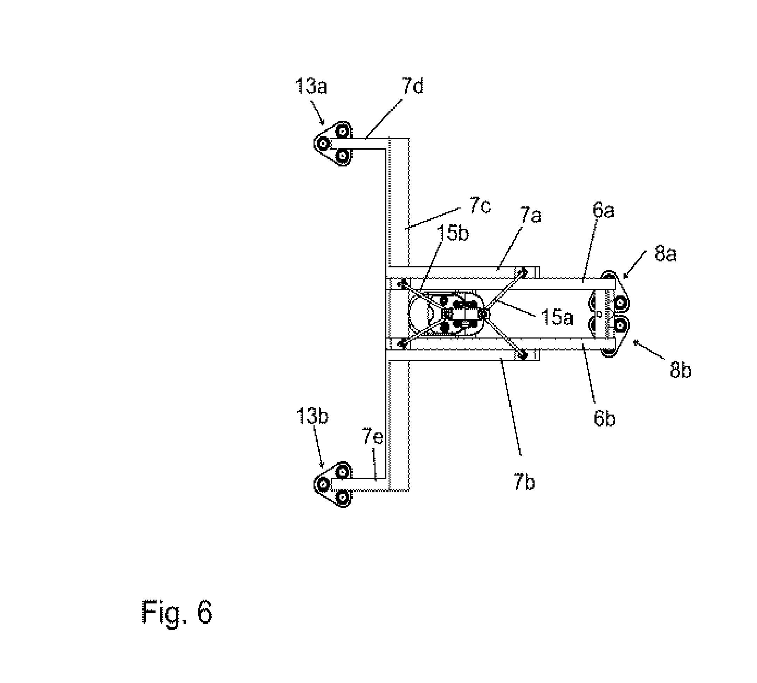

The exemplary embodiment of the lifting device shown in Figs. 1 to 6 includes a vertical frame 5 provided with a linear actuator, which in this example is a spindle motor 3 for driving a spindle 4 upwards out of the frame 5 and downwards into the frame 5. The frame 5 is provided with first support arms 6a, 6b, which are interconnected at one end thereof by a transverse arm 6c, and with second support arms 7a, 7b, which are interconnected at one end thereof by a transverse arm 7c. The transverse arm 7c is provided with further arms 7d and 7e, whereby the arms 7c, 7d and 7e form a forked end. The first support arms 6a, 7b and second support arms 7a, 7b are pivoted on a pivoting axle 18 connected to the lower part of the frame 5. The transverse arms 6c and 7c are on diametrically opposite sides of the frame 5. The first support arms 6a, 6b are provided with ball transfer units 8a, 8b connected to the transverse arm 6c via a T-connection 11, 12. The ball transfer units 8a, 8b are pivoted on an axle 9 via bearings 10a, 10b. Ball transfer units or ball casters are known per se, e.g. from US 970386. At the end opposite to the transverse arm 6c, the support arms 6a and 6b are provided with fastening means 16a, 16b for a force-transmitting means 15b. At the end opposite to the transverse arm 7c, the second support arms 7a, 7b are also provided with fastening means 17a, 17b for a force-transmitting means 15a. In the embodiment shown, the force-transmitting means 15b and 15a are plastic-coated steel ropes. At the ends of the further arms 7d and 7e are provided ball transfer units 13a and 13b, respectively. The ball transfer units 13a and 13b are connected to the arms 7d and 7e via pivoted joints 14a and 14b, respectively.

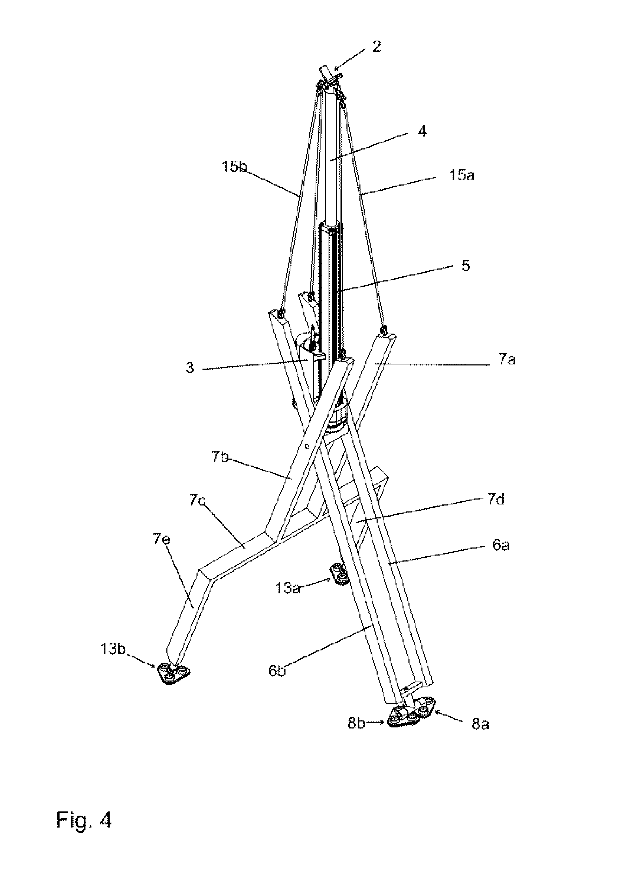

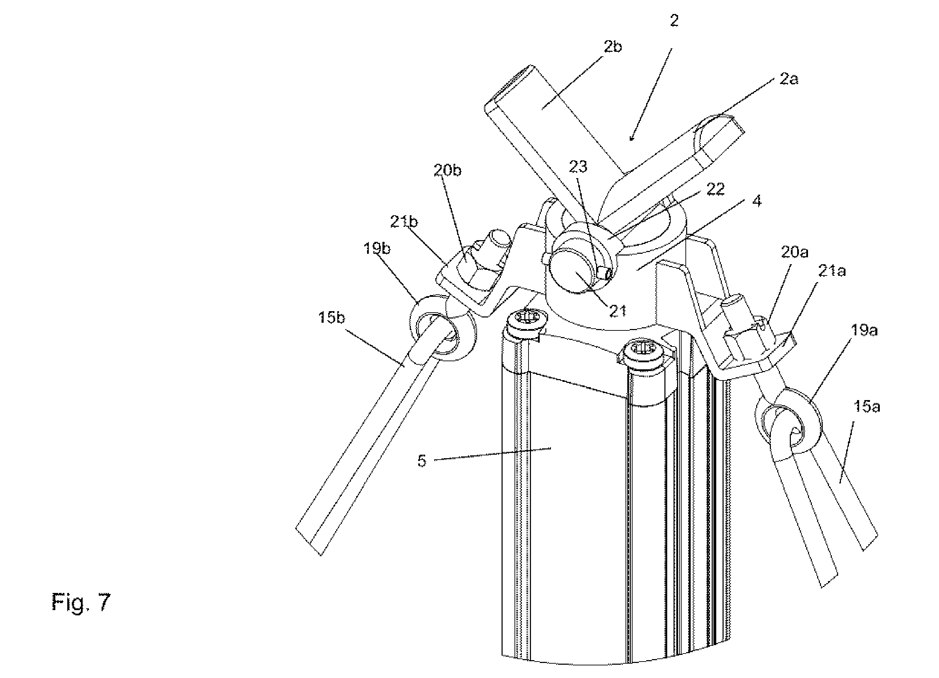

Figs. 4 to 7 show the lifting device in an elevated position where the spindle 4 has been moved upwards out of the frame 5 by the spindle motor 3. The steel ropes 15a, 15b are connected to the spindle 4 at the upper end thereof by eyebolts 19a and 19b connected to fastening brackets 21a and 21b by nuts 20a and 20b, respectively. On top of the spindle 4 is a gripping means 2 having an L-shaped form with legs 2a and 2b. The gripping means 2 is arranged on an axle 21 pivoted at bearings 22. The axle 21 is locked in place with a pin 21. When the spindle 4 moves upwards, it lifts the steel ropes 15a and 15b, and thus the corresponding ends of the support arms 6a, 6b and 7a, 7b, whereby the ball transfer units 8a, 8b, 13a, 13b move closer to the frame 5 lifting the device as a whole in addition to the linear movement of the spindle 4. Thus, the gripping means 2 moves upwards by about twice as much as the linear movement of the spindle 4 alone does. By this arrangement, the stroke of the spindle can be kept relatively short and thus the device relatively compact. By selecting the materials appropriately, the weight of the device can be kept below 15 kg, allowing, however, the lifting of heavy grand pianos weighing up to more than 600 kg.

By placing the gripping means 2 centrally on top of the spindle 4 and using the ball transfer units at the support arms is achieved a very stable structure in which the forces generated by the weight of the object to be lifted will not tend to tilt the lifting device, but the force vector travels essentially vertically along the vertical centre line of the lifting device. The ball transfer units allow free movement of the device during the lifting/tilting of the object into its vertical position on one of its edges.

In the above description of an embodiment of the present invention, the linear actuator used is a spindle motor. It is, however, also conceivable to use other actuators, such as hydraulic or pneumatic cylinders.

In addition, the device can be made collapsible, e.g. by arranging the frame 5 to pivot around the pivoting axle 18 between the arms 6a, 6b and by disconnecting the steel rope 15b from the fastening means 16a, 16b. It is also possible to arrange the fastening means 16a, 16b and/or 17a, 17b to slide along the support arms 6a, 6b or 7a, 7b, respectively, to allow the body 5 to be pivoted around the pivoting axle 18.

## Claims

1. Lifting device (1) for lifting grand pianos, pianos or similar heavy objects having an irregular shape into a vertical position on one of their lateral edges, the device (1) including a frame part (5), support arms (6a-6c, 7a-7e) resting on the ground, gripping means (2) for gripping one edge of the object to be lifted, and driving means (3, 4) connected to the frame part, which are connected functionally to the gripping means (2) for pivoting the object into a vertical position by the gripping means, **characterized in that** the support arms (6a-6c, 7a-7e) are provided with ball transfer units (8a, 8b, 13a, 13b) resting on the ground and allowing the device (1) to move freely in different directions along the ground during the lifting movement, the ball transfer units (8a, 8b, 13a, 13b) being placed radially apart from the frame part (5) into mutually different angular positions.

2. The lifting device of claim 1, **characterized in that** the frame part (5) is made essentially vertical, that the driving means include a linear actuator.

3. The lifting device of claim 2, **characterized in that** the linear actuator is a spindle motor (3), the spindle (4) of which is arranged to move in the longitudinal direction of the frame part (5) between an extended position extending upwards from the frame part and a retracted position.

4. The lifting device of claim 3, **characterized in that** an L-shaped gripping means (2) is connected pivotally to the upper end of the spindle (4), that the support arms (6a-6c, 7a-7e) are connected pivotally (18) to the frame part (5) in such a way that the ball transfer units are connected to one end of the support arms and at the end (16a, 16b, 17a, 17b) of each support arm opposite to the ball transfer units (8a, 8b, 13a, 13b) are provided force-transmitting means (15a, 15b), which are connected to the upper end of the spindle (4) in such a way that the movement of the spindle (4) upwards causes the ball transfer units (8a, 8b, 13a, 13b) to move closer to the frame part (5), whereby the upward movement of the gripping means (2) becomes greater than the axial displacement of the spindle (4) itself.
